(19) Europäisches Patentamt / European Patent Office / Office européen des brevets

(11) **EP 3 465 167 B1**

(12) **FASCICULE DE BREVET EUROPEEN**

(45) Date de publication et mention de la délivrance du brevet:
**10.08.2022   Bulletin 2022/32**

(21) Numéro de dépôt: **17727263.0**

(22) Date de dépôt: **07.06.2017**

(51) Classification Internationale des Brevets (IPC):
**G01N 21/88** *(2006.01)*

(52) Classification Coopérative des Brevets (CPC):
**G01N 21/8806;** G01N 2021/8835

(86) Numéro de dépôt international:
**PCT/EP2017/063772**

(87) Numéro de publication internationale:
**WO 2017/211860 (14.12.2017 Gazette 2017/50)**

(54) **DISPOSITIF ET PROCÉDÉ D'ÉCLAIRAGE POUR VISION INDUSTRIELLE**

BELEUCHTUNGSVORRICHTUNG UND VERFAHREN FÜR MASCHINELLES SEHEN

LIGHTING DEVICE AND METHOD FOR INDUSTRIAL VISION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.06.2016   FR 1655220**

(43) Date de publication de la demande:
**10.04.2019   Bulletin 2019/15**

(73) Titulaire: **TPL Vision UK Ltd**
**CHARING (KENT) TN27 0JW (GB)**

(72) Inventeur: **MAZEAUD, Guillaume**
**Perth PH2 7BE (GB)**

(74) Mandataire: **Nony**
**11 rue Saint-Georges**
**75009 Paris (FR)**

(56) Documents cités:
FR-A1- 2 966 939    US-A- 5 761 540
US-A1- 2001 054 680    US-A1- 2005 237 493
US-A1- 2013 293 702

## Description

### Domaine technique

La présente invention se rapporte à un dispositif d'éclairage pour vision industrielle, à un dispositif de vision industrielle et à un dispositif de tri industriel. L'invention concerne également un procédé d'éclairage pour vision industrielle, à un procédé de vision industrielle et un procédé de tri industriel.

### État de la technique

Dans le domaine industriel, il est connu de contrôler des biens convoyés sur une ligne de convoyage relativement à des défauts, des dimensions, des couleurs, ou encore de codes présents sur ces biens. Ce contrôle est avantageusement réalisé de manière automatisé afin d'être objectif. Pour ce faire, un dispositif de vision industrielle est mis en œuvre, commandant un système de contrôle, qui peut notamment trier les biens en fonction du contrôle réalisé. Par exemple, un bras mécanique peut être mis en œuvre pour retirer de la ligne de convoyage les biens considérés comme défectueux, c'est-à-dire ne remplissant pas un critère de tri déterminé. Le dispositif de vision industrielle comporte des sources lumineuses éclairant une zone d'intérêt traversée par les biens à trier, et une caméra optique pour prendre des images de la lumière reflétée par la zone d'intérêt traversée par les biens. Les images sont ensuite traitées par une unité électronique, par exemple un ordinateur, et le bras est commandé en fonction du résultat de ce traitement des images.

Pour que le contrôle soit réalisé de manière efficace, l'éclairage de la zone d'intérêt est importante : une zone d'ombre due à un mauvais éclairage pourrait en effet être interprétée comme un défaut d'un bien, par exemple, par le dispositif de vision industrielle.

Ainsi, il est connu de mettre en œuvre des dispositifs d'éclairage pour vision industrielle comprenant un grand nombre de sources lumineuses, notamment des LED (de l'anglais *« light-emitting diode »* pour « diode électroluminescente » ou DEL).

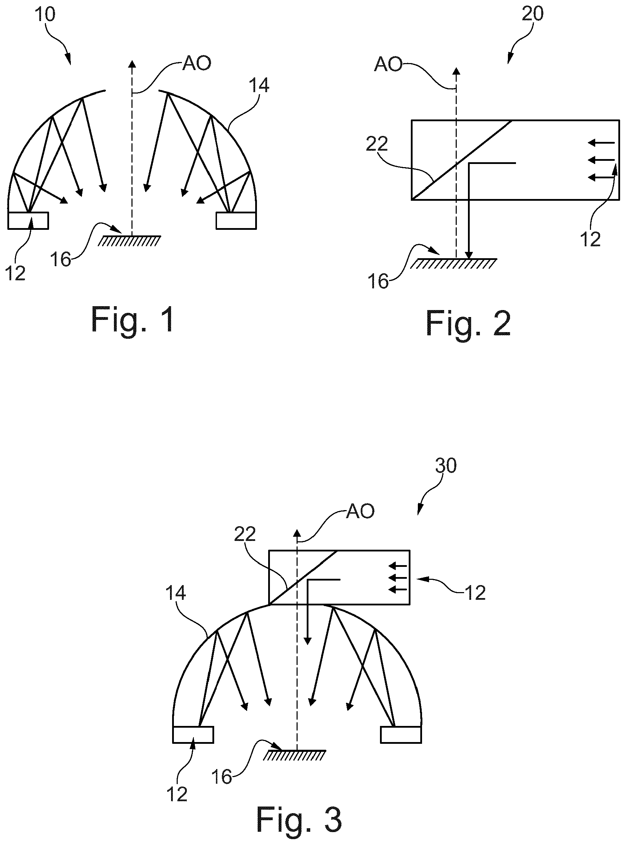

Sur l'exemple 10 de la figure 1, les LED 12 sont réparties en couronne à la base d'un dôme réfléchissant 14, hémisphérique, renvoyant les faisceaux lumineux vers la zone d'intérêt 16. L'axe optique AO de sortie vers la caméra est alors orienté perpendiculairement à la zone d'intérêt 16, vers le sommet du dôme 14.

Une autre solution connue 20, consiste à utiliser des LED 12, orientées vers une lame semi-réfléchissante 22 disposée au-dessus de la zone d'intérêt 16, qui réfléchit la lumière émise par les LED de sorte que celle-ci illumine la zone d'intérêt 16 sensiblement perpendiculairement à celle-ci. L'axe optique AO de sortie vers la caméra est orienté perpendiculairement à la zone d'intérêt 16.

Ces systèmes peuvent également être combinés comme illustré par l'exemple 30 de la figure 3 où une lame semi-réfléchissante 22 est disposée au niveau du sommet d'un dôme hémisphérique 14 pour combiner les deux types d'éclairage indirect de la zone d'intérêt 16.

Ces dispositifs présentent cependant un encombrement important au niveau de la zone d'intérêt, les rendant incompatibles avec la mise en œuvre d'un dispositif de tri, notamment d'un bras mécanique.

Par ailleurs, il est connu des dispositifs d'éclairage pour vision industrielle formés d'une pluralité de LED fixées sur un support plan rectangulaire, couramment appelés « ciels lumineux » ou « barrettes lumineuses ».

Ces dispositifs présentent un encombrement plus limité au niveau de la zone d'intérêt. En outre, ces dispositifs sont adaptés à être positionnés au-dessus de la zone d'action du bras mécanique tout en laissant le champ libre à celui-ci, permettant ainsi la mise en œuvre d'un dispositif de tri. Cependant, les dispositifs connus ne permettent pas un contrôle très fiable des biens convoyés sur une ligne de convoyage, en particulier lorsque la zone d'intérêt est très large.

Ce phénomène peut être amplifié par la surface de la zone d'intérêt elle-même, qui peut être plus ou moins réfléchissante. Des variations de brillance d'un bien à l'autre peuvent également être observées qui perturbent encore le contrôle par la caméra du dispositif de vision industrielle.

Il existe donc un besoin pour un dispositif d'éclairage pour vision industrielle perfectionné, ne présentant pas les inconvénients susmentionnés.

US 2005/0237493 décrit un dispositif destiné à uniformiser la lumière émise par une pluralité de lasers d'un projecteur ou d'une imprimante. US 5,761,540 décrit un dispositif d'éclairage pour vision industrielle. US 2001/0054680 décrit un dispositif d'éclairage pour un système d'inspection optique de conteneurs transparents.

### Résumé de l'invention

En réponse à ce besoin, l'invention propose un dispositif d'éclairage pour vision industrielle selon la revendication 1.

Ainsi, le dispositif selon l'invention permet de contrôler la luminosité perçue en fonction de l'éclairage de la zone d'intérêt et de contrôler les sources lumineuses pour modifier cette luminosité perçue, notamment pour assurer que la luminosité perçue soit homogène sur la zone d'intérêt.

Plus précisément, l'invention permet de prendre en compte la disparité des intensités lumineuses des rayons lumineux qui sont captés par le capteur optique, une intensité lumineuse d'un rayon étant classiquement variable en fonction de la partie de la zone d'intérêt qui l'a renvoyé vers le capteur optique. Par exemple, lorsque le capteur optique est disposé face au centre de la zone d'intérêt et que cette dernière est éclairée de manière homogène, il reçoit plus de lumière des parties de la zone d'intérêt centrales que des parties de la zone d'intérêt périphériques. La correction des sources lumineuses permet avantageusement une homogénéisation des intensités lumineuses reçues par le capteur, ce qui, généralement, réduit l'homogénéité de l'éclairage de la zone d'intérêt.

Selon des modes de réalisation préférés, le dispositif d'éclairage pour vision industrielle selon l'invention présente une ou plusieurs des caractéristiques suivantes, prises seules ou en combinaison :

- les sources lumineuses sont des LED ;
- au moins une source lumineuse, de préférence chaque source lumineuse, est associée à un objectif composé d'une lentille ou d'un ensemble de lentilles, pour modifier l'angle du cône de lumière émis par la source lumineuse ;
- le module de modification de la configuration des sources lumineuses comprend au moins l'un parmi, de préférence consiste en l'un parmi :

  • des moyens pour modifier l'intensité lumineuse émise par au moins une ou, de préférence, par chaque source lumineuse,
  • des moyens pour modifier la position d'au moins une, de préférence de chaque, source lumineuse, et, le cas échéant,
  • des moyens pour commander au moins un objectif, de préférence chaque objectif, pour modifier les angles des cônes de lumière émis par les sources lumineuses.

- le dispositif comprend en outre une unité électronique de commande reliée au module de comparaison de l'intensité lumineuse et au module de modification de la configuration des sources lumineuses, pour commander le module de modification de la configuration des sources lumineuses en fonction d'un signal de sortie du module de comparaison de l'intensité lumineuse ;
- l'unité électronique de commande met en œuvre au moins un régulateur PID, de préférence un régulateur PID distinct pour chacune des sources lumineuses ;
- le capteur optique est disposé au centre des sources lumineuses ;
- les sources lumineuses sont réparties dans un plan ;
- chaque source lumineuse émet un cône de lumière d'intensité lumineuse maximale supérieure à 20 lumens, de préférence supérieure à 40 lumens ;
- le capteur optique présente une profondeur de champ supérieure à 100 mm, de préférence supérieure à 300 mm et/ou inférieure à 700 mm, de préférence inférieure à 600 mm ;
- le capteur optique est de type CMOS, présentant de préférence une résolution de 640x480.

Selon un autre aspect, l'invention se rapporte à un dispositif de vision industrielle comprenant :

- un dispositif d'éclairage tel que décrit ci-avant dans toutes ses combinaisons,
- une caméra, et
- un dispositif de traitement des images captées par la caméra.

De préférence, la caméra est à proximité du capteur optique, de préférence à moins de 30 cm, 20 cm, 10 cm, de préférence à moins de 5 cm du capteur optique.
De préférence, le capteur optique mis en œuvre dans le dispositif d'éclairage est dans la caméra.
L'invention se rapporte également à un dispositif de convoyage de biens comprenant au moins :

- une voie de convoyage de biens, et
- un dispositif de vision industrielle tel que décrit ci-avant dans toutes ses combinaisons, dans lequel les au moins deux parties distinctes définissent un tronçon de la voie de convoyage.

Le dispositif d'éclairage permet avantageusement de repérer des biens disposés sur la voie avec la même fiabilité, quelle que soit leur position sur la voie.
L'invention est particulièrement efficace lorsque la zone d'intérêt est grande au regard de la distance qui la sépare de la caméra. Dans un mode de réalisation, la voie de convoyage de biens présente une largeur supérieure à 1 m, à 2 m, à 3 m, voire à 4 m et la caméra, de préférence disposée au-dessus de la voie de convoyage, est à moins de 5 m, moins de 3 m, voire moins de 2 m de ladite voie de convoyage.
De préférence, le dispositif de convoyage comprend en outre une unité de tri commandée par une unité électronique de commande reliée au dispositif de traitement du dispositif de vision industrielle, pour trier les biens en fonction des images prises par la caméra du dispositif de vision industrielle.
Selon un autre aspect, l'invention concerne un procédé d'éclairage d'un dispositif de vision industrielle, comprenant les étapes consistant à

i) éclairer une zone d'intérêt avec une pluralité de sources lumineuses ;
ii) capter la lumière réfléchie par au moins deux parties distinctes de la zone d'intérêt ;
iii) comparer l'intensité lumineuse de la lumière réfléchie par les au moins deux parties distinctes de la zone d'intérêt ;
iv) modifier la configuration des sources lumineuses, notamment pour que la différence entre les intensités lumineuses comparées soit inférieure à 20 %, de préférence inférieure à 10 %, de préférence encore inférieure à 5 %.

De préférence, le procédé d'éclairage est mis en œuvre au moyen d'un dispositif d'éclairage ou dans un dispositif de vision industrielle ou de convoyage de biens tels que décrits ci-avant dans toutes leurs combinaisons.

Selon encore un autre aspect, l'invention se rapporte à un procédé de tri industriel comprenant les étapes consistant à :

a) convoyer des biens à trier sur une voie de convoyage ;
b) éclairer une zone d'intérêt de la voie de convoyage, en mettant en œuvre un procédé d'éclairage tel que décrit ci-avant dans toutes ses combinaisons ;
c) capter la lumière réfléchie par la zone d'intérêt ;
d) identifier à partir de la lumière captée à l'étape c), les biens non conformes à un critère défini ; et
e) retirer de la voie de convoyage les biens identifiés à l'étape d).

Selon une première variante, l'étape b) est réalisée une fois, de préférence avant l'étape a), les étapes c) à e) étant répétées de manière itérative.

Selon une autre variante, les étapes b) à e) sont répétées de manière itérative.

Brève description des figures

D'autres caractéristiques et avantages de l'invention apparaîtront à la lecture de la description détaillée qui suit, laquelle description fait référence aux dessins ci-annexés parmi lesquels :

- les figures 1 à 3 représentent schématiquement des exemples connus de dispositifs d'éclairage pour vision industrielle ;
- la figure 4 représente schématiquement un exemple de dispositif de convoyage de biens muni d'un dispositif de vision industrielle ;
- les figures 5 à 8 illustrent un exemple de dispositif d'éclairage pouvant être mis en œuvre dans le dispositif de convoyage de biens de la figure 4 ;
- la figure 9 représente schématiquement un autre exemple de dispositif d'éclairage pouvant être mis en œuvre dans le dispositif de convoyage de la figure 4 ; et
- les figures 10 et 11 sont deux ordinogrammes de deux exemples de procédé de tri industriel.

**Description détaillée**

Dans la présente description, les éléments identiques ou de fonction identique portent le même signe de référence. À fin de concision de la description, ces éléments ne sont pas décrits en regard de chaque figure.

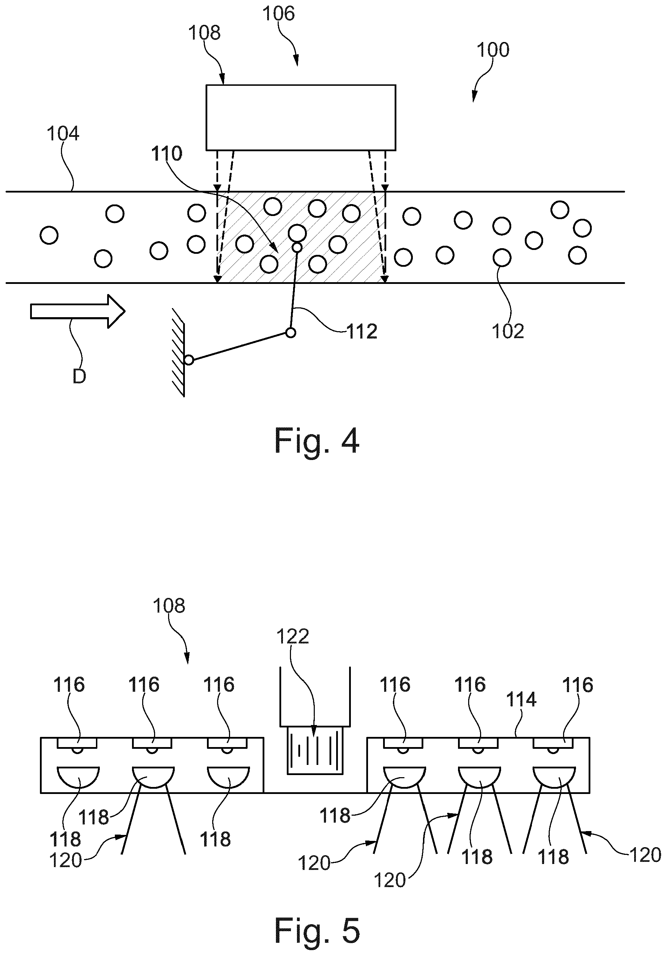

La figure 4 illustre schématiquement un dispositif 100 de convoyage industriel de biens 102. Ce dispositif de convoyage 100 comprend tout d'abord une voie de convoyage 104 convoyant les biens 102 dans la direction D. La voie de convoyage 104 est par exemple un tapis roulant. Le dispositif de convoyage 100 comprend un dispositif de vision industrielle 106, dont le dispositif d'éclairage 108 est plus particulièrement visible sur cette figure. Le dispositif d'éclairage 108 éclaire une zone d'intérêt 110 formée par un tronçon de la voie de convoyage 104, traversée par les biens 102. Le dispositif de convoyage 100 comprend encore une unité de tri 112 pour retirer du la voie de convoyage 104 les biens 102 dont le contrôle par le dispositif de vision industrielle 106 a révélé un défaut (c'est-à-dire que ces biens 102 ne remplissent pas un critère déterminé, contrôlé par le dispositif de vision industrielle 106). En l'espèce, cette unité de tri est constituée d'un bras mobile 112 pour retirer des biens 102 de la voie de convoyage 104.

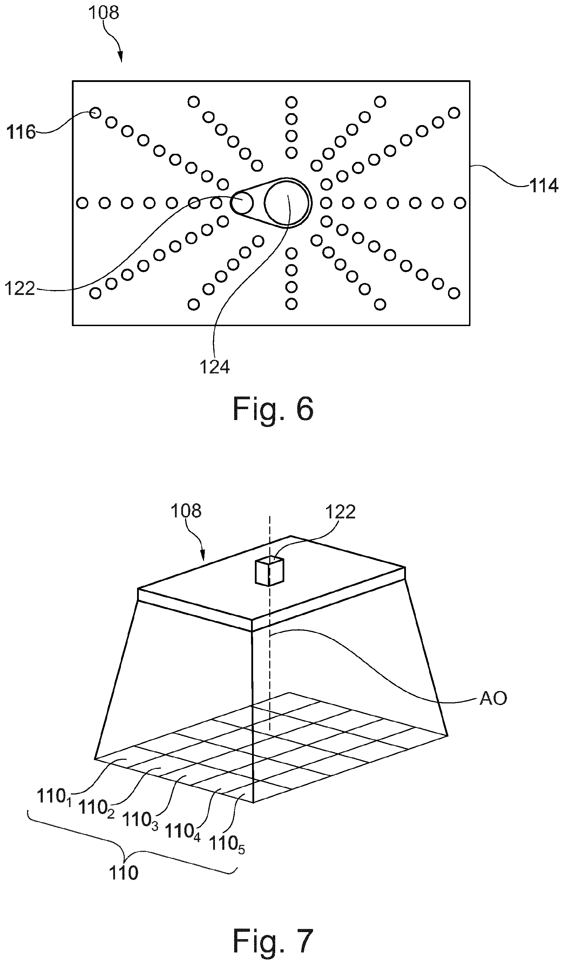

Comme cela est plus particulièrement visible sur les figures 5 et 6, le dispositif d'éclairage 108 comporte ici un support 114 plan, par exemple de forme rectangulaire, sur lequel sont fixées une pluralité de sources lumineuses 116. Ces sources lumineuses sont par exemples des LED 116 qui assurent une stabilité du contraste de la zone d'intérêt observée.

De préférence, chaque source lumineuse, notamment chaque LED, émet un cône de lumière d'intensité lumineuse maximale supérieure à 20 lumens, de préférence supérieure à 40 lumens.

Selon l'exemple représenté à la figure 5, à chacune des LED 116 est associé un objectif 118 composé d'une ou plusieurs lentilles optiques et permettant de modifier l'angle du cône formé par le faisceau lumineux 120 émis par la LED 116 associée et illuminant la zone d'intérêt 110. Les LED peuvent être toutes identiques, associés à des objectifs tous identiques. Dans ce cas notamment, les LED peuvent avantageusement être arrangées de manière concentrique autour du capteur optique 122, comme cela est illustré sur la figure 6. Le rayon $r_n$ de chaque cercle sur lequel sont réparties les LED est par exemple déterminé selon la formule :

$$r_n = k \times B^n$$

où :

- n est un entier naturel non nul, représentatif du rang du cercle par rapport au centre du support 114,
- B est une constante, de préférence comprise entre 0,92 et 0,98, et
- k est une constante, k pouvant par exemple être choisi sous la forme

$$k = 3 \times \alpha \times A$$

avec $\alpha$ l'angle au sommet du cône de lumière en sortie de la LED ou de l'objectif associé, le cas échéant, et A une constante de préférence comprise entre 1 et 1,15.

Enfin, un capteur optique 122 est disposé au voisinage du centre du support 114, de préférence au centre du support 114. Ce capteur optique 122 peut être indépendant d'une caméra 124, visible sur les figures 6 et 7, du dispositif de vision industrielle 106. Selon une variante, cependant, le capteur optique 122 du dispositif d'éclairage 108 est inclus dans la caméra 124 du dispositif de vision industrielle 106. En d'autres termes, on met en œuvre, dans ce cas, le même capteur optique 122 pour réguler l'éclairage de la zone d'intérêt par le dispositif d'éclairage et pour contrôler les biens convoyés avec le dispositif de vision industrielle.

Le capteur optique 122 peut par exemple être un capteur CMOS. Le capteur optique peut être de résolution peu élevée, notamment quand il est indépendant de la caméra du dispositif de vision industrielle. En pratique, on préfère une résolution de l'ordre de 640 x 480 pixels.

Le capteur optique 122 présente de préférence une profondeur de champ supérieure à 100 mm, de préférence supérieure à 300 mm et/ou inférieure à 700 mm, de préférence inférieure à 600 mm. De manière idéale, la profondeur de champ du capteur optique 122 est de 500 mm. Ceci permet en effet au capteur optique 122 de capter une image de l'ensemble de la zone d'intérêt 110, exploitable pour la vision industrielle.

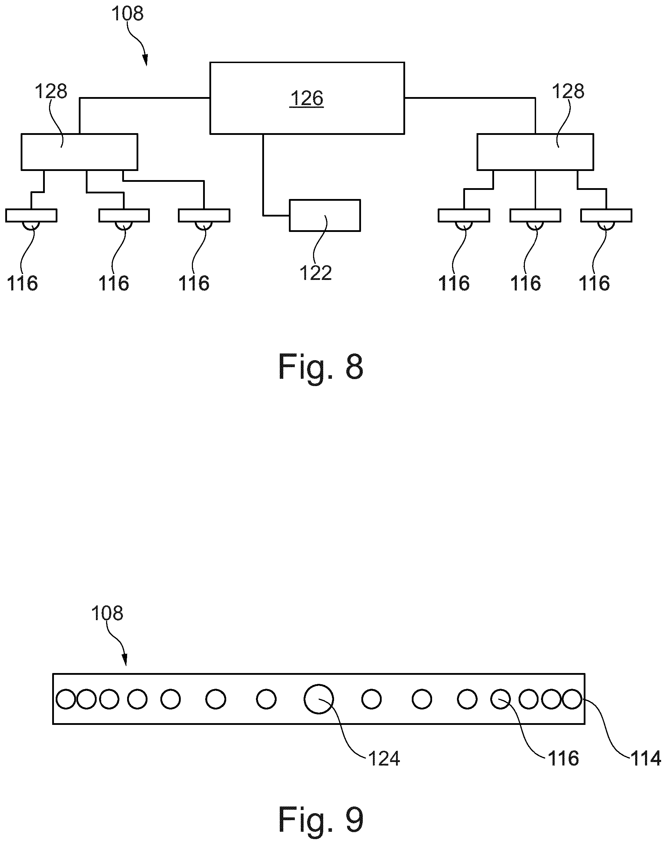

Comme représenté à la figure 8, le dispositif d'éclairage 108 comprend encore, relié à ce capteur optique 122, une unité électronique de commande 126 pour traiter l'image captée par le capteur et en déduire une intensité lumineuse réfléchie par chacune des parties $110_1$-$110_5$ de la zone d'intérêt 110. L'unité électronique de commande 126 peut par exemple être constituée d'un réseau de cellule programmable (ou FPGA, de l'anglais «*field-programmable gate array*») sous forme d'un circuit intégré. Ces cellules peuvent être connectées de manière définitive par programmation pour garantir des vitesses de traitement très rapides, notamment inférieure à 100 µs.

Pour déterminer une intensité lumineuse réfléchie par chacune des parties $110_1$-$110_5$, le capteur optique 122 est découpé en zones, par exemples en soixante zones de 320 pixels chacune, chaque zone du capteur optique 122 ayant pour fonction de mesurer une luminosité moyenne d'une portion $110_1$-$110_5$ de la zone d'intérêt 110. En effet, la zone d'intérêt 110 peut ne pas être une surface régulière, mais être constituée de nombreuses pièces formant la surface de la zone d'intérêt.

L'unité électronique de commande 126 est reliée à un module de modification de la configuration des sources lumineuses.

Ici, plus précisément, l'unité électronique de commande 126 est reliée à des régulateurs 128 émettant une consigne commandant l'intensité du courant d'alimentation de groupes de LED 116 en fonction de l'intensité lumineuse de la partie $110_1$-$110_5$ associée au groupe de LED commandé, déterminée par l'unité électronique de commande 126. En variante, cependant, les régulateurs 128 peuvent commander une intensité de courant d'alimentation différente pour chaque LED indépendamment ou encore uniquement pour certaines LED, indépendamment ou non. Au surplus ou en variante, les régulateurs 128 peuvent commander d'autres paramètres du dispositif d'éclairage permettant de modifier la luminosité captée par le capteur optique 122. Notamment les régulateurs 128 peuvent commander un déplacement des LED 116 les unes par rapport aux autres, perpendiculairement au plan du support et/ou dans le plan du support 114. Les régulateurs 128 peuvent également commander les objectifs 118 associés aux LED 116 pour modifier l'angle du cône formé par le faisceau lumineux émis par les LED 116 et éclairant la zone d'intérêt.

Ainsi, chaque régulateur 128 comparent ici l'intensité lumineuse réfléchie par la zone d'intérêt correspondant à la LED ou au groupe de LED qu'il commande à une intensité lumineuse de référence, et commande une modification de la configuration de la LED ou du groupe de LED correspondant, en conséquence. L'intensité de lumineuse de référence est par exemple l'intensité lumineuse d'une partie de référence de la zone d'intérêt. La partie de référence est par exemple constituée d'une ou plusieurs parties centrales, notamment de quatre parties centrales de la zone d'intérêt.

La commande des LED par les régulateurs peut notamment consister à mettre en œuvre un régulateur PID distinct pour chacune des sources lumineuses ou pour chaque groupe de LED commandé.

Chaque régulateur 128 forme ainsi un module de comparaison de l'intensité lumineuse de la lumière réfléchie par une partie de la zone d'intérêt avec une intensité lumineuse, dont le signal de sortie commande un module de modification de la configuration des sources lumineuses.

Il est avantageux que les différentes parties $110_1$-$110_5$ constituent une partition de la zone d'intérêt 110. Dans ce cas, en effet, les LED 116 permettent d'éclairer toute la zone d'intérêt. Par partition, on entend que les différentes parties $110_1$-$110_5$ sont non vides, disjointes deux à deux, et, réunies, forment la zone d'intérêt.

La variante de la figure 9 se distingue par la forme du support plan 114, plus allongée. En effet, selon ce mode de réalisation toutes les LED 116 sont alignées selon une unique direction, qui peut notamment être parallèle ou perpendiculaire à la direction D de convoyage des biens.

Par ailleurs, le capteur optique 122 du dispositif de vision industrielle 106 est ici le capteur optique de la caméra 124 du dispositif de vision industrielle 106. Ainsi, il n'a pas nécessaire de mettre en œuvre un capteur optique dédié au dispositif d'éclairage 108, celui-ci pouvant être commun aux dispositifs d'éclairage 108 et de vision industrielle 106. Notamment, ce capteur optique 122 peut être dans la caméra 124.

Enfin, l'unité électronique de commande 126 peut, dans certains cas, ne pas être présente. Dans ce cas, il est possible de réaliser la calibration des éclairages manuellement, notamment une fois pour toute, avant tout convoyage. Dans ce cas, il est avantageux que la commande des LED soit symétrique par rapport au centre du support 114, situé à proximité du capteur optique 122. Ceci permet de régler plus rapidement la luminosité. La commande des LED peut, dans ce cas, se faire manuellement. La commande manuelle des LED est par exemple réalisée au moyen de potentiomètres ou de boutons équivalents.

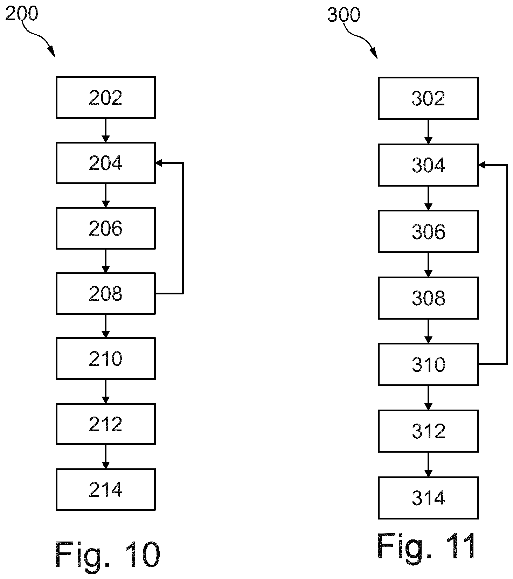

L'ordinogramme de la figure 10 illustre un premier exemple 200 de procédé de tri industriel, pouvant notamment être mis en œuvre dans un dispositif de tri industriel tel qu'il vient d'être décrit.

Selon ce premier exemple 200, le procédé débute par une première étape 202 d'éclairage de la zone d'intérêt 110 destinée à être traversée par les biens convoyés 102 à trier. Selon cet exemple 200, cette étape 202 est de préférence réalisée avant tout convoyage de biens 102. L'étape 204 suivante consiste alors à capter la lumière réfléchie par différentes portions de la zone d'intérêt 110, ces différentes parties formant avantageusement une partition de la zone d'intérêt 110.

Dans une étape 206, on compare alors l'intensité lumineuses captée, provenant desdites parties distinctes de la zone d'intérêt, avec une partie référence de la zone d'intérêt. Cette partie référence est par exemple choisie au centre de la zone d'intérêt, ou tout du moins au voisinage du centre de la zone d'intérêt.

En fonction de la comparaison réalisée à l'étape 206, on modifie, à l'étape 208, la consigne d'une ou de plusieurs LED 112. La consigne peut notamment consister en un courant d'alimentation des LED concernées. Cette modification peut alors être réalisée manuellement. En variante ou au surplus, on commande une modification de la position d'une ou plusieurs LED et/ou une modification de l'angle du cône du faisceau lumineux émis par une ou plusieurs LED.

On réitère alors éventuellement les étapes 204 à 208, jusqu'à obtenir une variation limitée de l'intensité lumineuse captée par le capteur optique et correspondant aux différentes parties de la zone d'intérêt. Cette variation limitée est de préférence inférieure à 20%, de préférence encore inférieure à 10%, de manière plus préférée encore, inférieure à 5% par rapport à l'intensité lumineuse de référence. Précisément, la variation est définie comme la valeur absolue de la différence entre l'intensité lumineuse réfléchie par la partie considérée de zone d'intérêt, d'une part, et l'intensité lumineuse de référence, d'autre part, rapportée à l'intensité lumineuse de référence. De préférence, les sources lumineuses sont réglées de manière à éclairer la zone d'intérêt de sorte que la lumière reçue par le capteur, de préférence disposé au centre du support, soit perçue comme homogène. Cet éclairage est donc différent de l'éclairage conventionnel, qui est homogène sur la zone d'intérêt, et donc hétérogène sur le capteur optique. En particulier, lorsque le capteur et la caméra sont au centre du support et lorsque l'éclairage de la zone d'intérêt est homogène, la lumière reçue par le capteur et renvoyée par la partie centrale de la zone d'intérêt est généralement plus intense que la lumière reçue par la caméra et renvoyée par la partie périphérique de la zone d'intérêt.

Ensuite, à une étape 210, on débute le convoyage de biens 102, afin que ceux-ci traversent la zone d'intérêt 110.

On procède alors à une étape 212 de vision industrielle, consistant à capter une image de la zone d'intérêt et à la traiter de manière connue en soi au moyen d'un dispositif de traitement des images captées par la caméra 124 pour y identifier les biens convoyés et vérifier que ceux-ci sont conformes à un critère de tri déterminé.

Enfin, à une étape 214, on procède au retrait de la voie de convoyage des biens 102 qui ont été déterminés comme non conformes au critère déterminé, au cours de l'étape 214 précédente.

Il est à noter qu'ici, durant toute la phase de convoyage, de vision industrielle et de tri, l'éclairage de la zone d'intérêt n'est de préférence pas modifié.

La figure 11 illustre un deuxième exemple 300 de procédé de tri industriel pouvant être mis en œuvre dans un dispositif de tri industriel tel que décrit précédemment.

Selon ce deuxième exemple, on éclaire tout d'abord la zone d'intérêt 110, au cours d'une première étape 302, tout en débutant le convoyage des biens 102.

L'étape 304 suivante consiste alors à capter la lumière réfléchie par différentes portions de la zone d'intérêt 110, ces différentes parties formant avantageusement une partition de la zone d'intérêt 110.

Dans une étape 306, on compare alors l'intensité lumineuse captée, provenant des différentes parties de la zone d'intérêt, avec une partie de référence de la zone d'intérêt. Cette partie de référence est par exemple choisie au centre de la zone d'intérêt, ou tout du moins au voisinage du centre de la zone d'intérêt.

En fonction de la comparaison réalisée à l'étape 306, on modifie, à l'étape 308, la consigne d'une ou de plusieurs LED 112. La consigne peut notamment consister en un courant d'alimentation des LED concernées. Cette modification peut alors être réalisée manuellement. En variante ou au surplus, on peut notamment commander une modification de la position d'une ou plusieurs LED et/ou une modification du cône du faisceau lumineux émis par une ou plusieurs LED.

Concomitamment, on procède à une étape 308 de vision industrielle, consistant à traiter l'image de la zone d'intérêt captée à l'étape 304 pour y identifier les biens convoyés et vérifier que ceux-ci sont conformes à un critère de tri déterminé, au moyen d'un dispositif de traitement des images captées par la caméra, connu en soi.

L'étape 310 immédiatement ultérieure consiste à retirer de la voie de convoyage les biens 102 qui ont été déterminés comme non conformes au critère choisi, au cours de l'étape 308 précédente.

On peut alors réitérer les étapes 304 à 310 de manière itérative, tant que des biens sont convoyés.

De nombreuses variantes de ce deuxième de procédé peuvent être imaginées.

Ainsi, selon une première variante, les étapes 304 à 308 sont mises en œuvre de manière itérative jusqu'à obtenir une variation limitée de l'intensité lumineuse captée par le capteur optique et correspondant aux différentes parties de la zone d'intérêt. Cette variation est de préférence inférieure à 20%, de préférence encore inférieure à 10%, de manière plus préférée encore, inférieure à 5% par rapport à l'intensité lumineuse de référence. Dans ce cas, les étapes de vision industrielle 308 et de tri 310 ne sont mises en œuvre qu'une fois obtenu un éclairage de la zone d'intérêt de variation limitée. On peut même imaginer dans ce cas que le convoyage des biens est interrompu le temps d'obtenir cet éclairage homogène et de réaliser la vision industrielle. On a alors un convoyage séquentiel des biens sur le tapis de convoyage.

L'invention n'est pas limitée aux exemples qui ont été décrits et de nombreuses variantes sont possibles.

Par exemple, les LED et les objectifs associés le cas échéants, peuvent être tels que l'angle au sommet $\alpha$ du cône de lumière soit égal, en degrés, à :

$$\alpha_n = 45 \times A \times B^n$$

où :

- n est un entier naturel non nul, représentatif du rang d'éloignement de la LED concernée au capteur optique,
- A et B sont des constantes, A étant de préférence compris entre 1 et 1,15 et/ou B étant compris entre 0,92 et 0,98.

L'éclairage de la zone d'intérêt peut être continu ou stroboscopique. Un éclairage stroboscopique permet notamment de suralimenter les LED, obtenant ainsi plus de lumière, pendant un temps court correspondant au temps d'exposition de la caméra de vision industrielle.

L'unité de tri peut, comme décrit précédemment, être un bras mécanique. Cependant, tout autre moyen permettant de retirer de la voie de convoyage des biens peut être mis en œuvre.

## Revendications

1. Dispositif de vision industrielle (106) comprenant

   - une caméra (124),
   - un dispositif de traitement des images captées par la caméra (124), et
   - un dispositif d'éclairage (108) pour vision industrielle, comprenant :

     - une pluralité de sources lumineuses (116) pour éclairer une zone d'intérêt (110),
     - un capteur optique (122) pour capter la lumière émise par la pluralité de sources lumineuses (116) et réfléchie par au moins deux parties distinctes ($110_1$ - $110_5$) de la zone d'intérêt (110),
     - un module de comparaison de l'intensité lumineuse de la lumière réfléchie par les au moins deux parties distinctes ($110_1$ - $110_5$) de la zone d'intérêt (110), et captée par le capteur optique (122), et
     - un module de modification de la configuration des sources lumineuses (116) en fonction de la comparaison des intensités lumineuses réfléchies par les au moins deux parties distinctes ($110_1$ - $110_5$) et captées par le capteur optique (122), pour que la différence entre les intensités lumineuses comparées soit inférieure à 20 %, de préférence inférieure à 10 %, de préférence encore inférieure à 5 %.

2. Dispositif de vision industrielle selon la revendication 1, dans lequel au moins une source lumineuse (116), de préférence chaque source lumineuse (116), est associée à un objectif (118) composé d'une lentille ou d'un ensemble de lentilles, pour modifier l'angle du cône de lumière (120) émis par la source lumineuse (116).

3. Dispositif de vision industrielle selon l'une quelconque des revendications précédentes, dans lequel le module de modification de la configuration des sources lumineuses (116) comprend au moins l'un parmi, de préférence consiste en l'un parmi :

   - des moyens pour modifier l'intensité lumineuse émise par au moins une ou, de préférence, par chaque source lumineuse (116),
   - des moyens pour modifier la position d'au moins une, de préférence de chaque, source lumineuse (116), et, le cas échéant,
   - des moyens pour commander au moins un objectif (118), de préférence chaque objectif (118), pour modifier les angles des cônes de lumière émis par les sources lumineuses (116).

4. Dispositif de vision industrielle selon l'une quelconque des revendications précédentes, dans lequel le dispositif d'éclairage comprend en outre une unité électronique de commande (126) reliée au module de comparaison de l'intensité lumineuse et au module de modification de la configuration des sources lumineuses, pour commander le module de modification de la configuration des sources lumineuses en fonction d'un signal de sortie du module de comparaison de l'intensité lumineuse.

**5.** Dispositif de vision industrielle selon la revendication 4, dans lequel l'unité électronique de commande met en œuvre au moins un régulateur PID, de préférence un régulateur PID distinct pour chacune des sources lumineuses (116).

**6.** Dispositif de vision industrielle selon l'une quelconque des revendications précédentes, dans lequel le capteur optique (122) est disposé au centre des sources lumineuses (116) et dans lequel les sources lumineuses (116) sont réparties dans un plan.

**7.** Dispositif de vision industrielle selon l'une quelconque des revendications précédentes, dans lequel chaque source lumineuse (116) émet un cône de lumière d'intensité lumineuse maximale supérieure à 20 lumens, de préférence supérieure à 40 lumens, et/ou dans lequel le capteur optique (122) présente une profondeur de champ supérieure à 100 mm, de préférence supérieure à 300 mm et/ou inférieure à 700 mm, de préférence inférieure à 600 mm, et/ou dans lequel le capteur optique (122) mis en œuvre dans le dispositif d'éclairage (108) est à moins de 10 cm de la caméra.

**8.** Dispositif de convoyage de biens (100), comprenant au moins :

- une voie (104) de convoyage de biens (102), et
- un dispositif de vision industrielle (106) selon l'une quelconque des revendications précédentes, dans lequel les au moins deux parties distinctes définissent un tronçon de la voie de convoyage (104).

**9.** Dispositif de convoyage selon la revendication immédiatement précédente, comprenant en outre une unité de tri (112) commandée par une unité électronique de commande reliée au dispositif de traitement du dispositif de vision industrielle (106), pour trier les biens (102) en fonction des images prises par la caméra (124) du dispositif de vision industrielle (106).

**10.** Dispositif selon l'une quelconque des revendications précédentes, dans lequel le capteur est inclus dans la caméra.

**11.** Procédé d'éclairage d'un dispositif de vision industrielle selon l'une quelconque des revendications 1 à 7, ledit procédé comprenant les étapes consistant à

i) éclairer une zone d'intérêt (110) avec une pluralité de sources lumineuses (116) ;
ii) capter la lumière réfléchie par au moins deux parties distinctes ($110_1$ - $110_5$) de la zone d'intérêt (110) ;
iii) comparer l'intensité lumineuse de la lumière réfléchie par les au moins deux parties distinctes ($110_1$ - $110_5$) de la zone d'intérêt (110) ;
iv) modifier la configuration des sources lumineuses (116), notamment pour que la différence entre les intensités lumineuses comparées soit inférieure à 20 %, de préférence inférieure à 10 %, de préférence encore inférieure à 5 %.

**12.** Procédé selon la revendication immédiatement précédente, dans lequel, à l'étape iii), on compare l'intensité lumineuse captée, provenant desdites parties distinctes de la zone d'intérêt, avec une partie de référence de la zone d'intérêt.

**13.** Procédé de tri industriel comprenant les étapes consistant à :

a) convoyer des biens (102) à trier sur une voie de convoyage (104) ;
b) éclairer une zone d'intérêt (110) de la voie de convoyage (104), en mettant en œuvre un procédé selon l'une des deux revendications immédiatement précédentes ;
c) capter la lumière réfléchie par la zone d'intérêt (110) ;
d) identifier à partir de la lumière captée à l'étape c), les biens (102) non conformes à un critère défini ; et
e) retirer de la voie de convoyage (104) les biens (102) identifiés à l'étape d).

**14.** Procédé selon la revendication immédiatement précédente, dans lequel l'étape b) est réalisée une fois, de préférence avant l'étape a), les étapes c) à e) étant répétées de manière itérative.

**15.** Procédé selon la revendication 13, dans lequel les étapes b) à e) sont répétées de manière itérative.

**Patentansprüche**

**1.** Vorrichtung für maschinelles Sehen (106) umfassend

- eine Kamera (124),
- eine Vorrichtung zur Verarbeitung der Bilder, die von der Kamera (124) erfasst werden, und
- eine Beleuchtungsvorrichtung (108) für maschinelles Sehen, umfassend:

- eine Mehrzahl von Lichtquellen (116) zur Beleuchtung eines Interessensbereichs (110),
- einen optischen Sensor (122) zur Erfassung des Lichts, das von der Mehrzahl von Lichtquellen (116) emittiert und von wenigstens zwei gesonderten Abschnitten ($110_1$ -

$110_5$) des Interessensbereichs (110) reflektiert wird,
- ein Modul zum Vergleich der Lichtstärke des Lichts, das von den wenigstens zwei gesonderten Abschnitten ($110_1$
- $110_5$) des Interessensbereichs (110) reflektiert und vom optischen Sensor (122) erfasst wird, und
- ein Modul zur Änderung der Konfiguration der Lichtquellen (116) je nach dem Vergleich der Lichtstärken, die von den wenigstens zwei gesonderten Abschnitten ($110_1$
- $110_5$) reflektiert und vom optischen Sensor (122) erfasst werden, damit die Differenz zwischen den verglichenen Lichtstärken unter 20 %, vorzugsweise unter 10 %, besser noch unter 5 % beträgt.

2. Vorrichtung für maschinelles Sehen nach Anspruch 1, wobei wenigstens eine Lichtquelle (116), vorzugsweise jede Lichtquelle (116), einem Objektiv (118) zugeordnet ist, das von einer Linse oder einer Linsenanordnung gebildet ist, um den Winkel des Lichtkegels (120) zu ändern, der von der Lichtquelle (116) emittiert wird.

3. Vorrichtung für maschinelles Sehen nach einem der vorhergehenden Ansprüche, wobei das Modul zur Änderung der Konfiguration der Lichtquellen (116) wenigstens eins von Folgendem umfasst, vorzugsweise aus einem von Folgendem besteht:

   - Mittel zur Änderung der Lichtstärke, die von wenigstens einer oder vorzugsweise von jeder Lichtquelle (116) emittiert wird,
   - Mittel zur Änderung der Position wenigstens einer, vorzugsweise jeder Lichtquelle (116), und, gegebenenfalls,
   - Mittel zur Steuerung wenigstens eines Objektivs (118), vorzugsweise jedes Objektivs (118), um die Winkel der Lichtkegel zu ändern, die von den Lichtquellen (116) emittiert werden.

4. Vorrichtung für maschinelles Sehen nach einem der vorhergehenden Ansprüche, wobei die Beleuchtungsvorrichtung ferner eine elektronische Steuerungseinheit (126) umfasst, die mit dem Modul zum Vergleich der Lichtstärke und dem Modul zur Änderung der Konfiguration der Lichtquellen verbunden ist, um das Modul zur Änderung der Konfiguration der Lichtquellen je nach einem Ausgangssignal des Moduls zum Vergleich der Lichtstärke zu steuern.

5. Vorrichtung für maschinelles Sehen nach Anspruch 4, wobei die elektronische Steuerungseinheit wenigstens einen PID-Regler, vorzugsweise einen gesonderten PID-Regler für jede der Lichtquellen (116) einsetzt.

6. Vorrichtung für maschinelles Sehen nach einem der vorhergehenden Ansprüche, wobei der optische Sensor (122) in der Mitte der Lichtquellen (116) angeordnet ist und wobei die Lichtquellen (116) in einer Ebene verteilt sind.

7. Vorrichtung für maschinelles Sehen nach einem der vorhergehenden Ansprüche, wobei jede Lichtquelle (116) einen Lichtkegel mit einer maximalen Lichtstärke größer als 20 Lumen, vorzugsweise größer als 40 Lumen emittiert, und/oder wobei der optische Sensor (122) eine Tiefenschärfe größer als 100 mm, vorzugsweise größer als 300 mm und/oder kleiner als 700 mm, vorzugsweise kleiner als 600 mm aufweist und/oder wobei sich der optische Sensor (122), der in der Beleuchtungsvorrichtung (108) eingesetzt wird, weniger als 10 cm von der Kamera befindet.

8. Güterfördervorrichtung (100) umfassend wenigstens:

   - eine Strecke (104) zur Förderung von Gütern (102), und
   - eine Vorrichtung für maschinelles Sehen (106) nach einem der vorhergehenden Ansprüche, wobei die wenigstens zwei gesonderten Abschnitte ein Teilstück der Förderstrecke (104) definieren.

9. Fördervorrichtung nach dem unmittelbar vorhergehenden Anspruch, ferner umfassend eine Sortiereinheit (112), die von eine elektronischen Steuerungseinheit gesteuert wird, die mit der Verarbeitungsvorrichtung der Vorrichtung für maschinelles Sehen (106) verbunden ist, um die Güter (102) je nach den Bildern zu sortieren, die von der Kamera (124) der Vorrichtung für maschinelles Sehen (106) aufgenommen werden.

10. Vorrichtung nach einem der vorhergehenden Ansprüche, wobei der Sensor in der Kamera enthalten ist.

11. Verfahren zur Beleuchtung einer Vorrichtung für maschinelles Sehen nach einem der Ansprüche 1 bis 7, wobei das Verfahren die Schritte umfasst, die in Folgendem bestehen

   i) Beleuchten eines Interessensbereichs (110) mit einer Mehrzahl von Lichtquellen (116);
   ii) Erfassen des Lichts, das von wenigstens zwei gesonderten Abschnitten ($110_1$ - $110_5$) des Interessensbereichs (110) reflektiert wird;
   iii) Vergleichen der Lichtstärke des Lichts, das von den wenigstens zwei gesonderten Abschnitten ($110_1$ - $110_5$) des Interessensbereichs (110) reflektiert wird;
   iv) Ändern der Konfiguration der Lichtquellen (116), insbesondere damit die Differenz zwischen den verglichenen Lichtstärken unter 20 %, vorzugsweise unter 10 %, besser noch unter 5 % beträgt.

**12.** Verfahren nach dem unmittelbar vorhergehenden Anspruch, wobei bei Schritt iii) die erfasste Lichtstärke, die von den gesonderten Abschnitten des Interessensbereichs kommt, mit einem Referenzabschnitt des Interessensbereichs verglichen wird.

**13.** Maschinelles Sortierverfahren umfassend die Schritte, die in Folgendem bestehen:

a) Fördern der zu sortierenden Güter (102) auf einer Förderstrecke (104);
b) Beleuchten eines Interessensbereichs (110) der Förderstrecke (104) unter Einsatz eines Verfahrens nach einem der zwei unmittelbar vorhergehenden Ansprüche;
c) Erfassen des Lichts, das vom Interessensbereich (110) reflektiert wird;
d) Ermitteln der Güter (102), die einem festgelegten Kriterium nicht entsprechen, anhand des bei Schritt c) erfassten Lichts; und
e) Entnehmen der bei Schritt d) ermittelten Güter (102) von der Förderstrecke (104).

**14.** Verfahren nach dem unmittelbar vorhergehenden Anspruch, wobei der Schritt b) einmal durchgeführt wird, vorzugsweise vor dem Schritt a), wobei die Schritte c) bis e) iterativ wiederholt werden.

**15.** Verfahren nach Anspruch 13, wobei die Schritte b) bis e) iterativ wiederholt werden.

**Claims**

**1.** Industrial vision device (106) comprising

- a camera (124),
- a device for processing images recorded by the camera (124), and
- a lighting device (108) for industrial vision, comprising:

- a plurality of light sources (116) for lighting a zone of interest (110),
- an optical sensor (122) for picking up the light emitted by the plurality of light sources (116) and reflected by at least two distinct parts ($110_1$ - $110_5$) of the zone of interest) (110),
- a module for comparing the light intensity of the light reflected by the at least two distinct parts ($110_1$ - $110_5$) of the zone of interest (110), and picked up by the optical sensor (122), and
- a module for modifying the configuration of the light sources (116) as a function of the comparison of the light intensities reflected by the at least two distinct parts ($110_1$ - $110_5$) and picked up by the optical sensor (122), so that the difference between the compared light intensities is less than 20%, preferably less than 10%, more preferably less than 5%.

**2.** Industrial vision device according to Claim 1, wherein at least one light source (116), preferably each light source (116), is associated with an objective (118) composed of a lens or of a set of lenses, for modifying the angle of the cone of light (120) emitted by the light source (116).

**3.** Industrial vision device according to either one of the preceding claims, wherein the module for modifying the configuration of the light sources (116) comprises at least one out of, preferably consists of one out of:

- means for modifying the light intensity emitted by at least one or, preferably, by each, light source (116),
- means for modifying the position of at least one, preferably of each, light source (116), and, if necessary,
- means for controlling at least one objective (118), preferably each objective (118), to modify the angles of the cones of light emitted by the light sources (116).

**4.** Industrial vision device according to any one of the preceding claims, wherein the lighting device further comprises an electronic control unit (126) linked to the module for comparing light intensity and to the module for modifying the configuration of the light sources, to control the module for modifying the configuration of the light sources as a function of an output signal from the module for comparing light intensity.

**5.** Industrial vision device according to Claim 4, wherein the electronic control unit implements at least one PID regulator, preferably one distinct PID regular for each of the light sources (116).

**6.** Industrial vision device according to any one of the preceding claims, wherein the optical sensor (122) is positioned at the centre of the light sources (116) and wherein the light sources (116) are distributed in a plane.

**7.** Industrial vision device according to any one of the preceding claims, wherein each light source (116) emits a cone of light of maximum light intensity greater than 20 lumens, preferably greater than 40 lumens, and/or wherein the optical sensor (122) has a depth of field greater than 100 mm, preferably greater than 300 mm and/or less than 700 mm, preferably less than 600 mm, and/or wherein the optical sensor (122) implemented in the lighting device (108) is at least 10 cm from the camera.

8. Goods conveying device (100), comprising at least:

   - one lane (104) for conveying goods (102), and
   - an industrial vision device (106) according to any one of the preceding claims, wherein the at least two distinct parts define a section of the conveying lane (104).

9. Goods conveying device according to the immediately preceding claim, further comprising a sorting unit (112) controlled by an electronic control unit linked to the processing device of the industrial vision device (106), for sorting the goods (102) as a function of the images taken by the camera (124), of the industrial vision device (106).

10. Device according to any one of the preceding claims, wherein the sensor is included in the camera.

11. Method for lighting an industrial vision device according to any one of Claims 1 to 7, said method comprising the steps consisting in

   i) lighting a zone of interest (110) with a plurality of light sources (116);
   (ii) picking up the light reflected by at least two distinct parts ($110_1$ - $110_5$) of the zone of interest (110) ;
   (iii) comparing the light intensity of the light reflected by the at least two distinct parts ($110_1$ - $110_5$) of the zone of interest (110);
   (iv) modifying the configuration of the light sources (116), notably so that the difference between the compared light intensities is less than 20%, preferably less than 10%, more preferably less than 5%.

12. Method according to the immediately preceding claim, wherein, in the step (iii), the light intensity picked up, originating from said distinct parts of the zone of interest, is compared with a reference part of the zone of interest.

13. Industrial sorting method comprising the steps consisting in:

   a) conveying goods (102) to be sorted on a conveying lane (104);
   b) lighting a zone of interest (110) of the conveying lane (104), by implementing the method according to one of the two immediately preceding claims;
   c) picking up the light reflected by the zone of interest (110);
   d) identifying, from the light picked up in the step c), the goods (102) that do not conform to a defined criterion; and
   e) removing from the conveying lane (104) the goods (102) identified in the step d).

14. Method according to the immediately preceding claim, wherein the step b) is performed once, preferably before the step a), the steps c) to e) being repeated iteratively.

15. Method according to Claim 13, wherein the steps b) to e) are repeated iteratively.

Fig. 1

Fig. 2

Fig. 3

Fig. 4

Fig. 5

108

116

114

122

124

## Fig. 6

108    122

AO

110₁ 110₂ 110₃ 110₄ 110₅

110

## Fig. 7

Fig. 8

Fig. 9

200

202

204

206

208

210

212

214

Fig. 10

300

302

304

306

308

310

312

314

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050237493 A
- US 5761540 A
- US 20010054680 A